# DEMANDE DE BREVET EUROPEEN

(11) **EP 4 685 267 A1**
(43) Date de publication de la demande: **28.01.2026**
(21) Numéro de dépôt: 25190605.3
(22) Date de dépôt: 21.07.2025
(51) Int. Cl.: C23D 5/06, A44C 27/00, G04B 19/12, G04B 45/00

(54) **COMPOSANT ÉMAILLÉ POUR UNE PIÈCE D HORLOGERIE OU DE JOAILLERIE**

(30) Priorité: 23.07.2024 CH 7892024
(71) Demandeur: Richemont International S.A., 1752 Villars-sur-Glâne (CH)
(72) Inventeur: Gilliéron, Romain, 1752 Villars-sur-Glâne (CH); Molnar, Nastaca, 1752 Villars-sur-Glâne (CH); Le Maitre, Saphir, 1752 Villars-sur-Glâne (CH); Gaouyat, Lucie, 1752 Villars-sur-Glâne (CH); Morard, Vivien, 1752 Villars-sur-Glâne (CH); Métin, Manon, 1226 Thônex (CH)
(74) Mandataire: Novagraaf International SA

(57) **Abrégé**

L'invention concerne un composant émaillé (100) pour une pièce d'horlogerie ou de joaillerie, comprenant au moins :
- un substrat de base (10), formé en alliage métallique,
- une couche d'émail (20), supportée par le substrat de base (10) et laissant des parties du substrat de base (10) non recouvertes à l'issue d'un procédé de cuisson de la couche d'émail (20),
caractérisé en ce que les parties du substrat de base (10) non recouvertes sont exemptes d'oxydation, et/ou de sulfuration et/ou de ternissement à l'issue du procédé de cuisson de la couche d'émail (20).

## Description

### Domaine technique de l'invention

La présente invention concerne de manière générale un composant émaillé pour une pièce d'horlogerie ou de joaillerie.

### État de la technique

Il est connu dans l'art antérieur de fabriquer des composants émaillés pour une pièce d'horlogerie ou de joaillerie. Typiquement, le procédé de fabrication comprend une étape consistant à recouvrir un substrat de base, métallique avec des pigments en suspension dans un liquide, puis une étape de cuisson est menée pour faire fondre les pigments sur le substrat. En contrepartie, ce système peut présenter des inconvénients liés à l'aspect du substrat une fois la cuisson effectuée. Il peut en effet arriver que le substrat présente des parties oxydées, ternes, ou encore sulfurées, ce qui peut conduire à mettre la pièce au rebut pour des raisons d'aspect.

En ce qui concerne ces défauts d'aspects, on peut mettre en place des contrôles visuels au cours de la fabrication, en particulier à l'issue de l'étape de cuisson, pour vérifier et contrôler les pièces. A titre d'exemple, on peut prévoir de passer les pièces sous une loupe grossissante ou sous un appareil de prise de vue. On peut prévoir de superposer un quadrillage comportant par exemple 100 carrés pour une surface observée de 1 cm² et de déclarer la pièce mauvaise si plus 3 carrés non adjacents contiennent une trace d'oxydation, de ternissement ou de sulfuration, et/ou si 2 carrés adjacents contiennent une trace d'oxydation, de ternissement ou de sulfuration. Une telle pièce peut être retouchée (polie, décapée...) pour ensuite être remise dans le flux de pièces conformes.

On peut aussi noter que les procédés d'émaillages ont pour but de produire des pièces d'aspects visibles par les utilisateurs, si bien que les fabricants sont toujours à la recherche d'améliorations pour garantir la maîtrise des couleurs et nuances des pièces, pour pouvoir offrir des rendus visuels reproductibles et esthétiques.

### Exposé de l'invention

Un but de la présente invention est de répondre aux inconvénients de l'art antérieur mentionnés ci-dessus et en particulier, tout d'abord, de proposer un composant émaillé pour une pièce d'horlogerie ou de joaillerie qui offre un risque réduit de défauts d'aspects suite à l'étape de cuisson, et/ou dont les couleurs et/ou nuances sont bien maîtrisées.

Pour cela un premier aspect de l'invention concerne un composant émaillé pour une pièce d'horlogerie ou de joaillerie, comprenant au moins :
- un substrat de base, formé en alliage métallique,
- une couche d'émail, supportée par le substrat de base et laissant des parties du substrat de base non recouvertes à l'issue d'un procédé de cuisson de la couche d'émail,
caractérisé en ce que les parties du substrat de base non recouvertes sont exemptes d'oxydation, et/ou de sulfuration et/ou de ternissement à l'issue du procédé de cuisson de la couche d'émail. La demanderesse s'est aperçue que pour certains alliages métalliques, on pouvait garantir une absence d'oxydation, et/ou de sulfuration et/ou de ternissement à l'issue du procédé de cuisson de la couche d'émail, si bien que les contrôles de production peuvent être allégés ou même supprimés. Autrement dit, le substrat de base, formé en alliage métallique est choisi pour être exempt d'oxydation, et/ou de sulfuration et/ou de ternissement à l'issue du procédé de cuisson de la couche d'émail. En particulier, le substrat de base comprend un composant principal choisi parmi Au, Ag, Pt et au plus 250 millièmes massiques de l'un du groupe constitué d'Au, Ag, Pd, Pt, Cu.

Selon un mode de réalisation,
le substrat de base comprenant:
   - un premier substrat de base avec un composant principal choisi parmi Au, Ag, Pt et au plus 250 millièmes massiques de l'un du groupe constitué d'Au, Ag, Pd, Pt, Cu,
   - un deuxième substrat de base différent du premier substrat de base avec ledit composant principal choisi parmi Au, Ag, Pt et avec au plus 250 millièmes massiques de l'un du groupe constitué d'Au, Ag, Pd, Pt, Cu,
le composant émaillé comprenant une couche d'émail formée à partir d'une même matière, et comprenant une première partie supportée par le premier substrat de base et une deuxième partie supportée par le deuxième substrat de base,
caractérisé en ce que la première partie de la couche d'émail supportée par le premier substrat de base présente une couleur différente de la deuxième partie de la couche d'émail supportée par le deuxième substrat de base. La demanderesse s'est aperçue qu'une même couche d'émail déposée sur deux substrats ayant le même composant principal (de l'or, de l'argent ou du platine) mais de faibles différences dans leurs composants secondaires, prend une première couleur sur le premier substrat et une deuxième couleur sur le deuxième substrat, différente de la première couleur. Cette caractéristique permet de proposer plus de nuances de couleurs, simplement en changeant un peu la composition du substrat métallique support. En particulier, le premier substrat de base et le deuxième substrat de base comprennent d'une part le même composant principal choisi parmi Au, Ag, Pt, et d'autre part, et de manière spécifique, au moins un des métaux d'alliages du groupe constitué d'Au, Ag, Pd, Pt, Cu, ledit au moins un (spécifique) des métaux d'alliages du groupe constitué d'Au, Ag, Pd, Pt, Cu étant choisi pour procurer une couleur différente du même émail entre le premier substrat de base et le deuxième substrat de base.

Selon un mode de réalisation, le premier aspect peut se rapporter à un composant émaillé pour une pièce d'horlogerie ou de joaillerie, comprenant au moins :
- un substrat de base, formé en alliage métallique,
- une couche d'émail, supportée par le substrat de base,

le substrat de base comprenant:
   - un premier substrat de base comprenant un composant principal choisi parmi Au, Ag, Pt et au plus 250 millièmes massiques de l'un du groupe constitué d'Au, Ag, Pd, Pt, Cu,
   - un deuxième substrat de base, différent du premier substrat de base, comprenant ledit composant principal choisi parmi Au, Ag, Pt et avec au plus 250 millièmes massiques de l'un du groupe constitué d'Au, Ag, Pd, Pt, Cu,
la couche d'émail étant formée à partir d'une même matière, et comprenant une première partie supportée par le premier substrat de base et une deuxième partie supportée par le deuxième substrat de base. Ainsi, la première partie de la couche d'émail supportée par le premier substrat de base peut présenter une couleur différente de la deuxième partie de la couche d'émail supportée par le deuxième substrat de base. En particulier, le premier substrat de base et le deuxième substrat de base comprennent d'une part le même composant principal choisi parmi Au, Ag, Pt, et d'autre part, et de manière spécifique, au moins un des métaux d'alliages du groupe constitué d'Au, Ag, Pd, Pt, Cu, ledit au moins un (spécifique) des métaux d'alliages du groupe constitué d'Au, Ag, Pd, Pt, Cu étant choisi pour procurer une couleur différente du même émail entre le premier substrat de base et le deuxième substrat de base.

Un deuxième aspect de l'invention peut se rapporter à un composant émaillé pour une pièce d'horlogerie ou de joaillerie, comprenant :
- un substrat de base, formé en alliage métallique,
- une couche d'émail, supportée par le substrat de base et laissant des parties du substrat de base non recouvertes à l'issue d'un procédé de cuisson de la couche d'émail,
caractérisé en ce que le substrat de base comprend au moins 725 millièmes massiques d'Au, de préférence au moins 750 millièmes massiques d'Au, et au moins l'un du groupe constitué d'Ag, Pd, Pt, Cu choisi pour que les parties du substrat de base non recouvertes soient exemptes d'oxydation, et/ou de sulfuration et/ou de ternissement à l'issue du procédé de cuisson de la couche d'émail. Selon cet aspect, un substrat comprenant au moins 72.5% et de préférence au moins 75% d'or en masse est exempt d'oxydation, et/ou de sulfuration et/ou de ternissement à l'issue du procédé de cuisson de la couche d'émail. Indépendamment de cet aspect, on peut aussi noter qu'une même couche d'émail (de même nature) recouvrant un premier substrat comprenant au moins 72.5% et de préférence au moins 75% d'or en masse et au moins l'un du groupe constitué d'Ag, Pd, Pt, Cu, présente une première couleur, différente d'une deuxième couleur lorsque cette même couche d'émail (de même nature) recouvre un deuxième substrat comprenant au moins 72.5% et de préférence au moins 75% d'or en masse et au moins l'un du groupe constitué d'Ag, Pd, Pt, Cu, différent du premier substrat.

Un troisième aspect de l'invention peut se rapporter à un composant émaillé pour une pièce d'horlogerie ou de joaillerie, comprenant :
- un substrat de base, formé en alliage métallique,
- une couche d'émail, supportée par le substrat de base et laissant des parties du substrat de base non recouvertes à l'issue d'un procédé de cuisson de la couche d'émail,
caractérisé en ce que le substrat de base comprend au moins 900 millièmes massiques d'Ag, de préférence au moins 925 millièmes massiques d'Ag, et au moins l'un du groupe constitué d'Au, Pd, Pt choisi pour que les parties du substrat de base non recouvertes soient exemptes d'oxydation, et/ou de sulfuration et/ou de ternissement à l'issue du procédé de cuisson de la couche d'émail. Selon cet aspect, un substrat comprenant au moins 90% et de préférence au moins 92.5% d'argent en masse et au moins l'un du groupe constitué d'Au, Pd, Pt, est exempt d'oxydation, et/ou de sulfuration et/ou de ternissement à l'issue du procédé de cuisson de la couche d'émail. Indépendamment de cet aspect, on peut aussi noter qu'une même couche d'émail (de même nature) recouvrant un premier substrat comprenant au moins 90% et de préférence au moins 92.5% d'argent en masse et au moins l'un du groupe constitué d'Au, Pd, Pt, présente une première couleur, différente d'une deuxième couleur lorsque cette même couche d'émail (de même nature) recouvre un deuxième substrat comprenant au moins 90% et de préférence au moins 92.5% d'argent en masse et au moins l'un du groupe constitué d'Au, Pd, Pt, différent du premier substrat.

Un quatrième aspect de l'invention peut se rapporter à un composant émaillé pour une pièce d'horlogerie ou de joaillerie, comprenant :
- un substrat de base, formé en alliage métallique,
- une couche d'émail, supportée par le substrat de base et laissant des parties du substrat de base non recouvertes à l'issue d'un procédé de cuisson de la couche d'émail,
caractérisé en ce que le substrat de base comprend au moins 825 millièmes massiques de Pt, de préférence au moins 850 millièmes massiques de Pt, et au moins l'un du groupe constitué d'Au, Ag, Cu choisi pour que les parties du substrat de base non recouvertes soient exemptes d'oxydation, et/ou de sulfuration et/ou de ternissement à l'issue du procédé de cuisson de la couche d'émail. Selon cet aspect, un substrat comprenant au moins 82.5% et de préférence au moins 85.0% de platine en masse et au moins l'un du groupe constitué d'Au, Ag, Cu, est exempt d'oxydation, et/ou de sulfuration et/ou de ternissement à l'issue du procédé de cuisson de la couche d'émail. Indépendamment de cet aspect, on peut aussi noter qu'une même couche d'émail (de même nature) recouvrant un premier substrat comprenant au moins 82.5% et de préférence au moins 85.0% de platine en masse et au moins l'un du groupe constitué d'Au, Ag, Cu, présente une première couleur, différente d'une deuxième couleur lorsque cette même couche d'émail (de même nature) recouvre un deuxième substrat comprenant au moins 82.5% et de préférence au moins 85.0% de platine en masse et au moins l'un du groupe constitué d'Au, Ag, Cu, différent du premier substrat.

Un cinquième aspect de l'invention peut se rapporter à un composant émaillé pour une pièce d'horlogerie ou de joaillerie, comprenant :
- un premier substrat de base, formé en un premier alliage métallique et comprenant au moins 725 millièmes massiques d'Au, de préférence au moins 750 millièmes massiques d'Au,
- un deuxième substrat de base, formé en un deuxième alliage métallique différent du premier alliage métallique, et comprenant au moins 725 millièmes massiques d'Au, de préférence au moins 750 millièmes massiques d'Au,
- une couche d'émail, formée à partir d'une même matière, et comprenant une première partie supportée par le premier substrat de base et une deuxième partie supportée par le deuxième substrat de base,
caractérisé en ce que la première partie de la couche d'émail supportée par le premier substrat de base présente une couleur différente de la deuxième partie de la couche d'émail supportée par le deuxième substrat de base.

Selon un mode de réalisation :
- le premier substrat de base comprend au moins 750 millièmes massiques d'Au, et au moins l'un d'Ag, Pd, Pt, Cu,
- le deuxième substrat de base comprend au moins 750 millièmes massiques d'Au, et au moins l'un d'Ag, Pd, Pt, Cu.

Un sixième aspect de l'invention peut se rapporter à un composant émaillé pour une pièce d'horlogerie ou de joaillerie, comprenant :
- un premier substrat de base, formé en un premier alliage métallique et comprenant au moins 900 millièmes massiques d'Ag, de préférence au moins 925 millièmes massiques d'Ag,
- un deuxième substrat de base, formé en un deuxième alliage métallique différent du premier alliage métallique, et comprenant au moins 900 millièmes massiques d'Ag, de préférence au moins 925 millièmes massiques d'Ag,
- une couche d'émail, formée à partir d'une même matière, et comprenant une première partie supportée par le premier substrat de base et une deuxième partie supportée par le deuxième substrat de base,
caractérisé en ce que la première partie de la couche d'émail supportée par le premier substrat de base présente une couleur différente de la deuxième partie de la couche d'émail supportée par le deuxième substrat de base.

Selon un mode de réalisation :
- le premier substrat de base comprend au moins 925 millièmes massiques d'Ag, et au moins l'un du groupe constitué d'Au, Pd, Pt,
- le deuxième substrat de base comprend au moins 925 millièmes massiques d'Ag, et au moins l'un du groupe constitué d'Au, Pd, Pt.

Un septième aspect de l'invention peut se rapporter à un composant émaillé pour une pièce d'horlogerie ou de joaillerie, comprenant :
- un premier substrat de base, formé en un premier alliage métallique et comprenant au moins 825 millièmes massiques de Pt, de préférence au moins 850 millièmes massiques de Pt,
- un deuxième substrat de base, formé en un deuxième alliage métallique différent du premier alliage métallique, et comprenant au moins 825 millièmes massiques de Pt, de préférence au moins 850 millièmes massiques de Pt,
- une couche d'émail, formée à partir d'une même matière, et comprenant une première partie supportée par le premier substrat de base et une deuxième partie supportée par le deuxième substrat de base,
caractérisé en ce que la première partie de la couche d'émail supportée par le premier substrat de base présente une couleur différente de la deuxième partie de la couche d'émail supportée par le deuxième substrat de base

Selon un mode de réalisation :
- le premier substrat de base comprend au moins 850 millièmes massiques de Pt, et au moins l'un du groupe constitué d'Au, Ag, Cu,
- le deuxième substrat de base comprend au moins 850 millièmes massiques de Pt, et au moins l'un du groupe constitué d'Au, Ag, Cu.

Selon un mode de réalisation, le substrat de base comprend au moins 725 millièmes massiques d'Au, de préférence au moins 750 millièmes massiques d'Au, et au moins l'un du groupe constitué d'Ag, Pd, Pt, Cu.

Selon un mode de réalisation, le substrat de base comprend entre 30 et 275 millièmes massiques d'Ag, de préférence entre 40 et 250 millièmes massiques d'Ag.

Selon un mode de réalisation, le substrat de base comprend entre 11 et 220 millièmes massiques de Cu, de préférence entre 21 et 210 millièmes massiques de Cu.

Selon un mode de réalisation, le substrat de base comprend entre 32 et 275 millièmes massiques de Pd, de préférence entre 42 et 250 millièmes massiques de Pd.

Selon un mode de réalisation, le substrat de base comprend entre 32 et 275 millièmes massiques de Pt, de préférence entre 42 et 250 millièmes massiques de Pt.

Selon un mode de réalisation, le substrat de base comprend au moins 900 millièmes massiques d'Ag, de préférence au moins 925 millièmes massiques d'Ag, et au moins l'un du groupe constitué d'Au, Pd, Pt.

Selon un mode de réalisation, le substrat de base comprend entre 30 et 85 millièmes massiques d'Au, de préférence entre 40 et 75 millièmes massiques d'Au.

Selon un mode de réalisation, le substrat de base comprend entre 25 et 100 millièmes massiques de Pd, de préférence entre 35 et 75 millièmes massiques de Pd.

Selon un mode de réalisation, le substrat de base comprend entre 25 et 100 millièmes massiques de Pt, de préférence entre 35 et 75 millièmes massiques de Pt.

Selon un mode de réalisation, le substrat de base comprend au moins 825 millièmes massiques de Pt, de préférence au moins 850 millièmes massiques de Pt, et au moins l'un du groupe constitué d'Au, Ag, Cu.

Selon un mode de réalisation, le substrat de base comprend entre 40 et 175 millièmes massiques d'Au, de préférence entre 50 et 150 millièmes massiques d'Au.

Selon un mode de réalisation, le substrat de base comprend entre 40 et 110 millièmes massiques d'Ag, de préférence entre 50 et 100 millièmes massiques d'Ag.

Selon un mode de réalisation, le substrat de base comprend entre 40 et 60 millièmes massiques de Cu, de préférence entre 45 et 55 millièmes massiques de Cu.

Selon un mode de réalisation, le substrat de base, et/ou le premier substrat de base et/ou le deuxième substrat de base peut être un métal laminé ou stratifié ou feuilleté ou composite dont les différentes couches ou strates ou feuilles sont visibles. Par exemple, le substrat de base, et/ou le premier substrat de base et/ou le deuxième substrat de base peut être obtenu par une technique dite « Mokume-gane ». En particulier, le substrat de base, et/ou le premier substrat de base et/ou le deuxième substrat de base peut être obtenu en empilant des feuilles ou couches ou strates de métal, qui sont ensuite chauffées, et/ou forgées et/ou laminées, et/ou brasées.

Selon un mode de réalisation, chaque feuille ou couche ou strate empilée peut comprendre un composant principal choisi parmi Au, Ag, Pt et au plus 250 millièmes massiques de l'un du groupe constitué d'Au, Ag, Pd, Pt, Cu.

Selon un mode de réalisation, plusieurs feuilles empilées ou toutes les feuilles ou couches ou strates empilées peuvent présenter la même composition.

Selon un mode de réalisation, une ou plusieurs feuilles ou couches ou strates empilées peuvent présenter une première composition (un composant principal choisi parmi Au, Ag, Pt et au plus 250 millièmes massiques de l'un du groupe constitué d'Au, Ag, Pd, Pt, Cu), et une ou plusieurs feuilles ou couches ou strates empilées peuvent présenter une deuxième composition (un composant principal choisi parmi Au, Ag, Pt et au plus 250 millièmes massiques de l'un du groupe constitué d'Au, Ag, Pd, Pt, Cu), différente de la première composition. Selon un mode de réalisation, la ou les feuilles ou couches ou strates empilées de la première composition forment une première portion de feuilles ou couches ou strates empilées, la ou les feuilles ou couches ou strates empilées de la deuxième composition forment une deuxième portion de feuilles ou couches ou strates empilées, accolée à la première portion. On obtient un substrat dont les différentes couches ou strates sont visibles, avec deux compositions distinctes. Selon un mode de réalisation, la première portion et la deuxième portion (par exemple deux nuances différentes d'or gris) ont le même aspect ou la même couleur si elles ne sont pas recouvertes d'émail, et présentent des couleurs différentes si elles sont recouvertes par le même émail : la différence de composition est « révélée » par le recouvrement de l'émail.

### Description des figures

D'autres caractéristiques et avantages de la présente invention apparaîtront plus clairement à la lecture de la description détaillée qui suit de mode(s) de réalisation de l'invention donné(s) à titre d'exemple(s) nullement limitatif(s) et illustré(s) par les dessins annexés, dans lesquels :
[fig. 1] représente un composant émaillé en coupe selon l'art antérieur ;
[fig. 2] représente un composant émaillé en coupe selon l'invention ;
[fig. 3] représente un exemple d'un composant émaillé en coupe comprenant une même couche d'émail recouvrant différents substrats métalliques ;
[fig. 4] représente un exemple d'un composant émaillé en vue de dessus comprenant une même couche d'émail recouvrant différents substrats métalliques.

### Description détaillée de mode(s) de réalisation

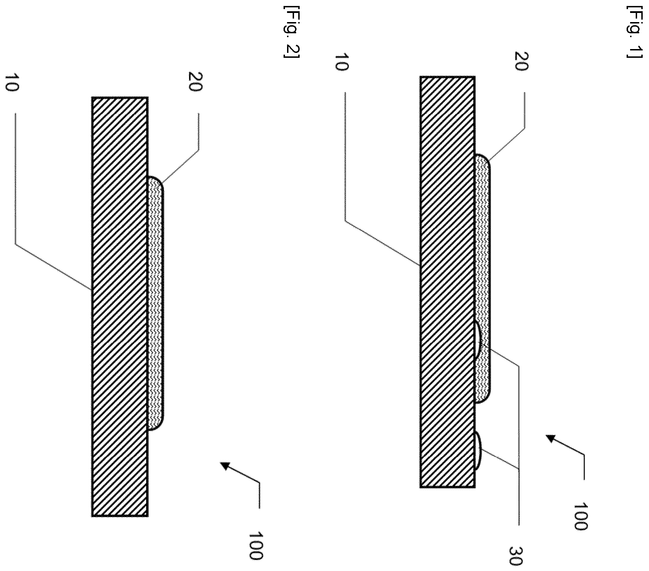

La figure 1 représente en coupe un composant émaillé 100 selon l'art antérieur, et comprenant :
- un substrat de base 10, métallique,
- une couche d'émail 20,
- des dépôts 30 (oxydation, sulfuration, ternissement) agencés sur le substrat de base 10, métallique.

Le substrat de base, métallique peut typiquement comprendre de manière générale un composé métallique principal (c'est-à-dire à plus de 50 % en poids) comme de l'or (Au), du l'argent (Ag) ou du platine (Pt). La couche d'émail 20 comprend typiquement au moins 50% en masse de silice, de l'alumine, du calcium, du sodium, de l'oxyde de titane, et au moins un colorant.

Pour fabriquer le composant émaillé 100, on peut prévoir une étape consistant à recouvrir le substrat de base 10, métallique avec des pigments en suspension dans un liquide, puis on peut prévoir une étape de cuisson pour faire fondre les pigments sur le substrat. Typiquement, l'étape de cuisson est effectuée dans un four de cuisson à une température pouvant être supérieure ou égale à 700°C, de préférence supérieure ou égale à 800°C. Après une phase de chauffage progressif, le temps de cuisson à la température maximale peut aller de quelques minutes à plusieurs dizaines de minute, voire plusieurs heures.

A l'issue de cette étape de chauffage et de cuisson, il peut arriver que le substrat 10 réagisse et que des dépôts 30 d'oxyde ou de sulfures ou même des ternissements se forment à la surface du substrat de base 10, métallique. De tels dépôts 30 altèrent l'aspect visuel et la qualité perçue du composant émaillé 100. Lors d'une inspection visuelle à la loupe grossissante, on peut prévoir de superposer un quadrillage comportant par exemple 100 carrés pour une surface observée de 1 cm² et on peut prévoir de déclarer la pièce mauvaise ou non-conforme si plus 3 carrés non adjacents contiennent une trace d'oxydation, de ternissement ou de sulfuration, et/ou si 2 carrés adjacents contiennent une trace d'oxydation, de ternissement ou de sulfuration. Dans certains cas, une telle pièce mauvaise ou non-conforme peut être retouchée (polie, décapée...) pour ensuite être remise dans le flux de pièces conformes. Dans d'autres cas, une retouche n'est pas possible et le composant émaillé doit être mis au rebut.

Pour palier ce problème de non-conformités visuelles, il est proposé de sélectionner un substrat de base métallique particulier, et la figure 2 représente un composant émaillé 100 en coupe selon l'invention et comprenant :
- un substrat de base 10, métallique,
- une couche d'émail 20.
On peut noter que la surface du substrat de base 10 est exempte d'oxydation, de sulfuration, ou de ternissement, même à l'issue du procédé de cuisson et sans retouche.

Selon un premier aspect, le substrat de base comprend au moins 725 millièmes massiques d'Au, de préférence au moins 750 millièmes massiques d'Au, et au moins l'un du groupe constitué d'Ag, Pd, Pt, Cu. Plus particulièrement, le substrat de base peut comprendre entre 30 et 275 millièmes massiques d'Ag, de préférence entre 40 et 250 millièmes massiques d'Ag ; le substrat de base peut comprendre entre 11 et 220 millièmes massiques de Cu, de préférence entre 21 et 210 millièmes massiques de Cu ; le substrat de base peut comprendre entre 32 et 275 millièmes massiques de Pd, de préférence entre 42 et 250 millièmes massiques de Pd ; le substrat de base peut comprendre entre 32 et 275 millièmes massiques de Pt, de préférence entre 42 et 250 millièmes massiques de Pt.

Concrètement, on peut prévoir les nuances suivantes, les chiffres indiquant les compositions massiques : Au₉₁₇Ag₈₃ ou Au₉₇₉Cu₂₁ ou Au₉₁₇Pt₈₃ ou Au₉₅₈Pt₄₂ ou Au₉₅₈Ag₄₂ ou Au₉₅₈Pd₄₂ ou Au₉₅₈Cu₄₂ ou Au₉₁₇Ag₄₀Pd₄₃ ou Au₉₁₇Ag₄₀Pt₄₃ ou Au₉₅₀Cu₅₀ ou Au₉₄₀Cu₆₀ ou Au₉₃₀Cu₇₀ ou Au₉₁₇Ag₄₀Cu₄₃ ou Au₇₅₀Ag₂₅₀ ou Au₇₅₀Pd₂₅₀ ouAu₇₅₀Pt₂₅₀ ou Au₇₅₀Ag₄₀ Cu₂₁₀ ou Au₇₅₀Ag₄₀Pt₂₁₀ ou Au₇₅₀Pt₈₃Cu₁₆₇ ou Au₇₅₀Pd₈₃Cu₁₆₇.

Selon un deuxième aspect, le substrat de base comprend au moins 900 millièmes massiques d'Ag, de préférence au moins 925 millièmes massiques d'Ag, et au moins l'un du groupe constitué d'Au, Pd, Pt. Plus particulièrement, le substrat de base peut comprendre entre 30 et 85 millièmes massiques d'Au, de préférence entre 40 et 75 millièmes massiques d'Au ; le substrat de base peut comprendre entre 25 et 100 millièmes massiques de Pd, de préférence entre 35 et 75 millièmes massiques de Pd ; le substrat de base peut comprendre entre 25 et 100 millièmes massiques de Pt, de préférence entre 35 et 75 millièmes massiques de Pt.

Concrètement, on peut prévoir les nuances suivantes, les chiffres indiquant les compositions massiques : Ag₉₅₀Pd₅₀ ou Ag₉₅₀ₒAu₅₀ ou Ag₉₂₅Pd₇₅ ou Ag₉₂₅Pt₇₅ ou Ag₉₂₅Au₇₅ ou Ag₉₂₅Au₄₀Pd₃₅ ou Ag₉₂₅Au₄₀Pt₃₅.

Selon un troisième aspect, le substrat de base comprend au moins 825 millièmes massiques de Pt, de préférence au moins 850 millièmes massiques de Pt, et au moins l'un du groupe constitué d'Au, Ag, Cu. Plus particulièrement, le substrat de base peut comprendre entre 40 et 175 millièmes massiques d'Au, de préférence entre 50 et 150 millièmes massiques d'Au ; le substrat de base peut comprendre entre 40 et 110 millièmes massiques d'Ag, de préférence entre 50 et 100 millièmes massiques d'Ag ; le substrat de base peut comprendre entre 40 et 60 millièmes massiques de Cu, de préférence entre 45 et 55 millièmes massiques de Cu.

Concrètement, on peut prévoir les nuances suivantes, les chiffres indiquant les compositions massiques : Pt₉₅₀AU₅₀ ou Pt₈₅₀Au₅₀Ag₁₀₀ ou Pt₉₅₀Cu₅₀ ou Pt₉₅₀Ag₅₀ ou Pt₈₅₀Au₁₅₀.

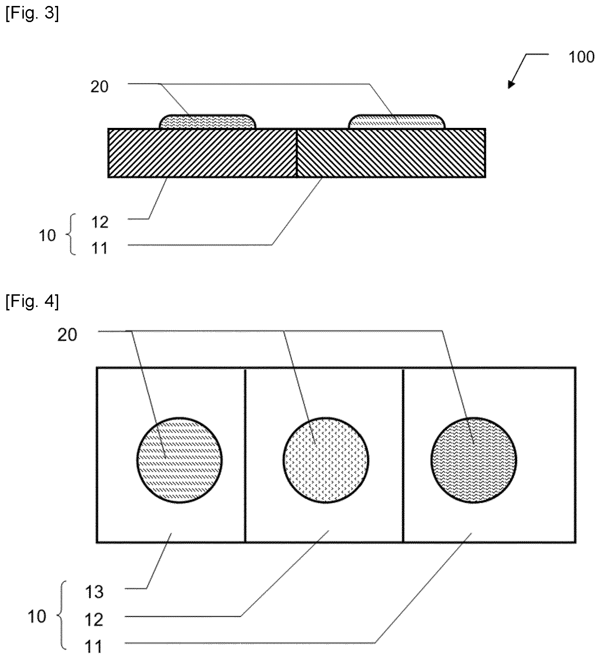

La figure 3 représente un exemple d'un composant émaillé en coupe comprenant une même couche d'émail 20 recouvrant un substrat de base 10 comprenant un premier substrat de base 11 et un deuxième substrat de base 12, différent du premier substrat de base 11. Une même couche d'émail 20 recouvre le premier substrat de base 11 et le deuxième substrat de base 12. En particulier, le premier substrat de base 11 et le deuxième substrat de base 12 peuvent comprendre en majorité le même composé métallique de base (de l'or, de l'argent ou du platine) et peuvent différer en ce qui concerne des composés métalliques d'addition. La demanderesse s'est aperçue que la couleur de la couche d'émail 20 était différente sur le premier substrat de base 11 et sur le deuxième substrat de base 12, même si le procédé de dépose des pigments et le procédé de cuisson sont les mêmes.

Selon un premier aspect, le premier substrat de base 11 et le deuxième substrat de base 12 peuvent chacun comprendre au moins 725 millièmes massiques d'Au, de préférence au moins 750 millièmes massiques d'Au, et au moins l'un du groupe constitué d'Ag, Pd, Pt, Cu. Plus particulièrement, le premier substrat de base 11 et le deuxième substrat de base 12 peuvent chacun comprendre entre 30 et 275 millièmes massiques d'Ag, de préférence entre 40 et 250 millièmes massiques d'Ag ; le premier substrat de base 11 et le deuxième substrat de base 12 peuvent chacun comprendre entre 11 et 220 millièmes massiques de Cu, de préférence entre 21 et 210 millièmes massiques de Cu ; le premier substrat de base 11 et le deuxième substrat de base 12 peuvent chacun comprendre entre 32 et 275 millièmes massiques de Pd, de préférence entre 42 et 250 millièmes massiques de Pd ; le premier substrat de base 11 et le deuxième substrat de base 12 peuvent chacun comprendre entre 32 et 275 millièmes massiques de Pt, de préférence entre 42 et 250 millièmes massiques de Pt.

Concrètement, le premier substrat de base 11 et le deuxième substrat de base 12 (différents) peuvent être choisis parmi l'une des nuances suivantes, les chiffres indiquant les compositions massiques : Au₉₁₇Ag₈₃ ou Au₉₇₉Cu₂₁ ou Au₉₁₇Pt₈₃ ou Au₉₅₈Pt₄₂ ou Au₉₅₈Ag₄₂ ou Au₉₅₈Pd₄₂ ou Au₉₅₈Cu₄₂ ou Au₉₁₇Ag₄₀Pd₄₃ ou Au₉₁₇Ag₄₀Pt₄₃ ou Au₉₅₀Cu₅₀ ou Au₉₄₀Cu₆₀ ou Au₉₃₀Cu₇₀ ou Au₉₁₇Ag₄₀Cu₄₃ ou Au₇₅₀Ag₂₅₀ ou Au₇₅₀Pd₂₅₀ ouAu₇₅₀Pt₂₅₀ ou Au₇₅₀Ag₄₀ Cu₂₁₀ ou Au₇₅₀AG₄₀Pt₂₁₀ ou Au₇₅₀Pt₈₃Cu₁₆₇ ou Au₇₅₀Pd₈₃Cu₁₆₇.

Selon un deuxième aspect, le premier substrat de base 11 et le deuxième substrat de base 12 (différents) peuvent comprendre au moins 900 millièmes massiques d'Ag, de préférence au moins 925 millièmes massiques d'Ag, et au moins l'un du groupe constitué d'Au, Pd, Pt. Plus particulièrement, le premier substrat de base 11 et le deuxième substrat de base 12 (différents) peuvent comprendre entre 30 et 85 millièmes massiques d'Au, de préférence entre 40 et 75 millièmes massiques d'Au ; le premier substrat de base 11 et le deuxième substrat de base 12 (différents) peuvent comprendre entre 25 et 100 millièmes massiques de Pd, de préférence entre 35 et 75 millièmes massiques de Pd ; le premier substrat de base 11 et le deuxième substrat de base 12 (différents) peuvent comprendre entre 25 et 100 millièmes massiques de Pt, de préférence entre 35 et 75 millièmes massiques de Pt.

Concrètement, le premier substrat de base 11 et le deuxième substrat de base 12 (différents) peuvent être choisis parmi l'une des nuances suivantes, les chiffres indiquant les compositions massiques : Ag₉₅₀Pd₅₀ ou Ag₉₅₀Au₅₀ ou Ag₉₂₅Pd₇₅ ou Ag₉₂₅Pt₇₅ ou Ag₉₂₅Au₇₅ ou Ag₉₂₅Au₄₀Pd₃₅ ou Ag₉₂₅Au₄₀Pt₃₅.

Selon un troisième aspect, le premier substrat de base 11 et le deuxième substrat de base 12 (différents) peuvent comprendre au moins 825 millièmes massiques de Pt, de préférence au moins 850 millièmes massiques de Pt, et au moins l'un du groupe constitué d'Au, Ag, Cu. Plus particulièrement, le premier substrat de base 11 et le deuxième substrat de base 12 (différents) peuvent comprendre entre 40 et 175 millièmes massiques d'Au, de préférence entre 50 et 150 millièmes massiques d'Au ; le premier substrat de base 11 et le deuxième substrat de base 12 (différents) peuvent comprendre entre 40 et 110 millièmes massiques d'Ag, de préférence entre 50 et 100 millièmes massiques d'Ag ; le premier substrat de base 11 et le deuxième substrat de base 12 (différents) peuvent comprendre entre 40 et 60 millièmes massiques de Cu, de préférence entre 45 et 55 millièmes massiques de Cu.

Concrètement, le premier substrat de base 11 et le deuxième substrat de base 12 (différents) peuvent être choisis parmi l'une des nuances suivantes, les chiffres indiquant les compositions massiques : Pt₉₅₀Au₅₀ ou Pt₈₅₀Au₅₀Ag₁₀₀ ou Pt₉₅₀Cu₅₀ ou Pt₉₅₀Ag₅₀ ou Pt₈₅₀Au₁₅₀.

La figure 4 représente un exemple d'un composant émaillé en vue de dessus comprenant une même couche d'émail 20 recouvrant un substrat de base 10 comprenant un premier substrat de base 11, un deuxième substrat de base 12, et un troisième substrat de base 13, tous différents. Comme pour la figure 3, le premier substrat de base 11, le deuxième substrat de base 12 et le troisième substrat de base 13 peuvent comprendre en majorité le même composé métallique de base (de l'or, de l'argent ou du platine) et peuvent différer en ce qui concerne des composés métalliques d'addition. La demanderesse s'est aperçue que la couleur de la couche d'émail 20 était différente sur le premier substrat de base 11, sur le deuxième substrat de base 12 et sur le troisième substrat de base 13, même si le procédé de dépose des pigments et le procédé de cuisson sont les mêmes. La figure 4 représente en noir et blanc un aspect de remplissage différent pour le premier substrat de base 11, le deuxième substrat de base 12 et le troisième substrat de base 13 pour refléter les différences de couleurs.

A titre d'exemple particulier, des composants émaillés ont été réalisés et un spectrocolorimètre a été utilisé pour mesurer la couleur de la couche d'émail 20 dans l'espace CIE L*a*b* selon norme ISO 8654. Pour une couche d'émail 20 réalisée avec une même référence, les mesures suivantes ont été réalisées en fonction du substrat de base :
- substrat or blanc Au₉₁₇Ag₈₃ (alliage AuAg 22 carats) / couche d'émail 400TR : mesure CIE L*a*b = 74.77 / -18.78 / 25.17
- substrat or blanc Au₉₅₈Ag₄₂ (alliage AuAg 23 carats) / couche d'émail 400TR : mesure CIE L*a*b = 69.95 / -15.43 / 20.26
- substrat or gris Au₉₁₇Pd₈₃ (alliage AuPd 22 carats) / couche d'émail 400TR : mesure CIE L*a*b = 63.71 / -2.95 / 4.95
- substrat or gris Au₉₅₈Pd₄₂ (alliage AuPd 23 carats) / couche d'émail 400TR : mesure CIE L*a*b = 61.21 / -8.83 / -0.32
- substrat or rose Au₉₁₇Cu₈₃ (alliage AuCu 22 carats) / couche d'émail 7531 TR : mesure CIE L*a*b = 69.82 / -6.89 / 58.43
- substrat or rose Au₉₇₉Cu₂₁ (alliage AuCu 23.5 carats) / couche d'émail 7531 TR : mesure CIE L*a*b = 69.75 / -10.63 / 57.77
- substrat or gris Au₉₁₇Pt₈₃ (alliage AuPt 22 carats) / couche d'émail 5TR : mesure CIE L*a*b = 63.63 / 19.88 / 9.91
- substrat or gris Au₉₅₈Pt₄₂ (alliage AuPt 23 carats) / couche d'émail 5TR : mesure CIE L*a*b = 64.38 / 24.32 / 13.26
- substrat or blanc Au₉₁₇Ag₄₂ (alliage AuAg 22 carats) / couche d'émail 7554TR : mesure CIE L*a*b = 49.36 / 2.22 / 10.54
- substrat or blanc Au₉₅₈Ag₄₂ (alliage AuAg 23 carats) / couche d'émail 7554TR : mesure CIE L*a*b = 40.32 / 4.43 / 2.77

On peut noter des essais ci-dessus que pour une même référence d'émail, une petite variation de la composition du substrat entraîne une différence notable des valeurs de la mesure de colorimétrie effectuée avec le spectrocolorimètre, et ces différences sont nettement visibles à l'œil nu, comme on peut le vérifier avec le calcul de l'écart de couleur (deltaE) supérieur à 2, alors que la teinte du substrat de base (nu) peut rester similaire.

On comprendra que l'invention concerne également une pièce d'horlogerie ou de joaillerie comprenant un composant émaillé tel que décrit précédemment.

### Application industrielle

Un composant émaillé selon la présente invention, et sa fabrication, sont susceptibles d'application industrielle.

On comprendra que diverses modifications et/ou améliorations évidentes pour l'homme du métier peuvent être apportées aux différents modes de réalisation de l'invention décrits dans la présente description sans sortir du cadre de l'invention.

## Revendications

1. Composant émaillé (100) pour une pièce d'horlogerie ou de joaillerie, comprenant au moins :
- un substrat de base (10), formé en alliage métallique,
- une couche d'émail (20), supportée par le substrat de base (10) et laissant des parties du substrat de base (10) non recouvertes à l'issue d'un procédé de cuisson de la couche d'émail (20),
**caractérisé en ce que** les parties du substrat de base (10) non recouvertes sont exemptes d'oxydation, et/ou de sulfuration et/ou de ternissement à l'issue du procédé de cuisson de la couche d'émail (20).

2. Composant émaillé (100) selon la revendication 1,
le substrat de base (10) comprenant :
- un premier substrat de base (11) comprenant un composant principal choisi parmi Au, Ag, Pt et comprenant au plus 250 millièmes massiques de l'un du groupe constitué d'Ag, Pd, Pt, Cu,
- un deuxième substrat de base (12), différent du premier substrat de base (11), comprenant ledit composant principal choisi parmi Au, Ag, Pt et comprenant au plus 250 millièmes massiques de l'un du groupe constitué d'Ag, Pd, Pt, Cu,
le composant émaillé (100) comprenant une couche d'émail (20) formée à partir d'une même matière, et comprenant une première partie supportée par le premier substrat de base (11) et une deuxième partie supportée par le deuxième substrat de base (12),
**caractérisé en ce que** la première partie de la couche d'émail (20) supportée par le premier substrat de base (11) présente une couleur différente de la deuxième partie de la couche d'émail (20) supportée par le deuxième substrat de base (12).

3. Composant émaillé (100) selon la revendication 1 ou 2, dans lequel le substrat de base (10) comprend au moins 725 millièmes massiques d'Au, de préférence au moins 750 millièmes massiques d'Au, et au moins l'un du groupe constitué d'Ag, Pd, Pt, Cu.

4. Composant émaillé (100) selon la revendication 3, dans lequel le substrat de base (10) comprend entre 30 et 275 millièmes massiques d'Ag, de préférence entre 40 et 250 millièmes massiques d'Ag.

5. Composant émaillé (100) selon la revendication 3 ou 4, dans lequel le substrat de base (10) comprend entre 11 et 220 millièmes massiques de Cu, de préférence entre 21 et 210 millièmes massiques de Cu.

6. Composant émaillé (100) selon l'une des revendications 3 à 5, dans lequel le substrat de base (10) comprend entre 32 et 275 millièmes massiques de Pd, de préférence entre 42 et 250 millièmes massiques de Pd.

7. Composant émaillé (100) selon l'une des revendications 3 à 6, dans lequel le substrat de base (10) comprend entre 32 et 275 millièmes massiques de Pt, de préférence entre 42 et 250 millièmes massiques de Pt.

8. Composant émaillé (100) selon la revendication 1 ou 2, dans lequel le substrat de base (10) comprend au moins 900 millièmes massiques d'Ag, de préférence au moins 925 millièmes massiques d'Ag, et au moins l'un du groupe constitué d'Au, Pd, Pt.

9. Composant émaillé (100) selon la revendication 8, dans lequel le substrat de base (10) comprend entre 30 et 85 millièmes massiques d'Au, de préférence entre 40 et 75 millièmes massiques d'Au.

10. Composant émaillé (100) selon l'une des revendications 8 ou 9, dans lequel le substrat de base (10) comprend entre 25 et 100 millièmes massiques de Pd, de préférence entre 35 et 75 millièmes massiques de Pd.

11. Composant émaillé (100) selon l'une des revendications 8 ou 9, dans lequel le substrat de base (10) comprend entre 25 et 100 millièmes massiques de Pt, de préférence entre 35 et 75 millièmes massiques de Pt.

12. Composant émaillé (100) selon la revendication 1 ou 2, dans lequel le substrat de base (10) comprend au moins 825 millièmes massiques de Pt, de préférence au moins 850 millièmes massiques de Pt, et au moins l'un du groupe constitué d'Au, Ag, Cu.

13. Composant émaillé (100) selon la revendication 12, dans lequel le substrat de base (10) comprend entre 40 et 175 millièmes massiques d'Au, de préférence entre 50 et 150 millièmes massiques d'Au.

14. Composant émaillé (100) selon la revendication 12 ou 13, dans lequel le substrat de base (10) comprend entre 40 et 110 millièmes massiques d'Ag, de préférence entre 50 et 100 millièmes massiques d'Ag.

15. Composant émaillé (100) selon la revendication 12, dans lequel le substrat de base (10) comprend entre 40 et 60 millièmes massiques de Cu, de préférence entre 45 et 55 millièmes massiques de Cu.
